# EUROPÄISCHE PATENTSCHRIFT

(11) **EP 1 457 085 B1**
(45) Veröffentlichungstag und Bekanntmachung des Hinweises auf die Patenterteilung: **30.04.2014**
(21) Anmeldenummer: 02795297.7
(22) Anmeldetag: 20.12.2002
(51) Int. Cl.: H04L 1/18, H04W 36/02, H04W 16/24, H04W 36/08, H04W 88/02

(54) **VERFAHREN ZUM PAKETVERMITTELTEN DATENÜBERTRAGUNG BEI FUNKZELLENWECHSEL**
METHOD FOR TRANSMITTING PACKET SWITCHED DATA DURING CELL CHANGE
PROCÉDÉ DE TRANSMISSION DE DONNÉES PAR PAQUETS AU COURS DU CHANGEMENT DE CELLULE RADIO

(30) Priorität: 21.12.2001 EP 01130732
(43) Veröffentlichungstag der Anmeldung: 15.09.2004
(73) Patentinhaber: Siemens Aktiengesellschaft, 80333 München (DE)
(72) Erfinder: SCHNIEDENHARN, Jörg, 13587 Berlin (DE); KROTH, Norbert, 14471 Potsdam (DE)
(86) Internationale Anmeldenummer: PCT/EP2002/014914
(87) Internationale Veröffentlichungsnummer: WO 2003/055258

(56) Entgegenhaltungen:
- EP-A- 0 695 053
- EP-A- 0 869 629
- US-B1- 6 301 479

## Beschreibung

Die Erfindung betrifft ein Verfahren zur paketvermittelten Übertragung von in Nutzinformationen enthaltenen Datenpaketen in einem zellularen Funk-Kommunikationssystem nach dem Oberbegriff des Anspruchs 1.

Die Erfindung betrifft ferner ein zellulares Funk-Kommunikationssystem zur paketvermittelten Übertragung von in Nutzinformationen enthaltenen Datenpaketen nach dem Oberbegriff des Anspruchs 3.

Außerdem betrifft die Erfindung eine Teilnehmerstation zur paketvermittelten Datenübertragung von in Nutzinformationen enthaltenen Datenpaketen in einem zellularen Funk-Kommunikationssystem nach dem Oberbegriff des Anspruchs 4.

Funk-Kommunikationssysteme gewinnen zunehmend an Bedeutung im geschäftlichen, aber auch privaten Bereich. In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Teilnehmerstation, insbesondere einer Mobilstation, übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme wird die Funkschnittstelle entsprechend TD/CDMA-Übertragungsverfahren bzw. FD/CDMA-Übertragungsverfahren in Übertragungskanäle unterteilt, die die Funkressourcen der Funkschnittstelle zwischen den einzelnen Teilnehmerstationen separieren. Für UMTS (Universal Mobile Telecommunication System) oder andere Systeme der dritten Generation sind für die Übertragungskanäle beispielsweise Frequenzen im Frequenzband von ca. 2000 MHz vorgesehen.

Für das bereits erwähnte UMTS-Funk-Kommunikationssystem wird zwischen einem sogenannten FDD-Modus (Frequency Division Duplex) und einem TDD-Modus (Time Division Duplex) unterschieden, Der TDD-Modus zeichnet sich insbesondere dadurch aus, dass ein gemeinsames Frequenzband sowohl für die Datenübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

Zur Übertragung der Daten zwischen einer Basisstation und einer Teilnehmerstation kann zum einen auf Verfahren zurückgegriffen werden, die auf verbindungsorientierten Konzepten beruhen, und zum anderen auf Verfahren, die auf der Basis logischer Verbindungen beruhen. Bei verbindungsorientierten Datenübertragungen müssen während der gesamten Zeit der Datenübertragung physikalische Ressourcen der Funkschnittstelle bereitgestellt werden. Bei der Datenübertragung über logische Verbindungen ist eine dauerhafte Bereitstellung von physikalischen Ressourcen nicht nötig.

Ein Beispiel für Datenübertragung über logische Verbindungen ist die Datenübertragung mittels Datenpaketen. Hier besteht während der Dauer der gesamten Übertragung eine logische Verbindung zwischen der Basisstation und der Teilnehmerstation, jedoch werden physikalische Ressourcen nur während der eigentlichen Übertragungszeiten der Datenpakte bereitgestellt. Dieses Verfahren basiert darauf, dass die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Im Rahmen des ISO/OSI Referenzmodells umfassen die Basisstation ausschließlich die Funktionen der physikalischen Schicht, d.h. Funktionen die die Bitübertragungsschicht betreffen. Funktionalitäten höher geordneter Schichten, wie beispielsweise fehlerbehandelnde Verfahren der Sicherungsschicht oder Vermittlungsfunktionen der Vermittlungsschicht werden nicht in der Basisstation durchgeführt, sondern in nachgeordneten Einheiten des Radionetzwerk-Subsystems wie beispielsweise dem Radionetzwerkkontroller.

Aus der EP 0 695 053 A2 ist ein Verfahren zur Datenübertragung zwischen Basisstationen und Teilnehmerstationen in zellularen Kommunikationssystemen bekannt, bei dem Datenpakete zwischen einer Teilnehmerstation und einer Basisstation übertragen werden. Alle von der Basisstation gesendeten Datenpakete werden im Netz gespeichert. Bei einem Handover nimmt die neue Basisstation den Protokollzustand der alten Basisstation an. Somit bleibt der in der alten Basisstation gespeicherte Datenpaketübertragungsstatus erhalten, so dass der Handover für die Teilnehmerstation transparent ist. Dies bedeutet, dass im Fall eines Handovers für die Teilnehmerstation das Datenpaketübertragungsverfahren mit einem im Dokument beschriebenen ARQ-Verfahren (welches für den Uplink in den Figuren 3 und 4, sowie für den Downlink in den Figuren 5 und 6 beschrieben ist) so fortgeführt wird, als ob kein Handover durchgeführt worden wäre.

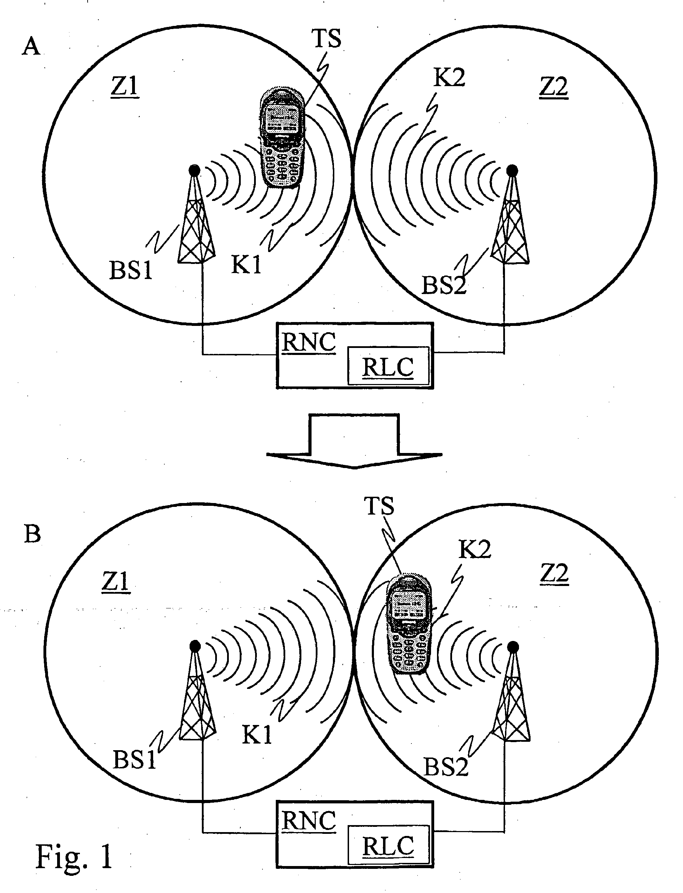

Aus der US 6,301,479 ist gemäß dem Abschnitt "Background Of The Invention" in Verbindung mit der Textbeschreibung zu den Figuren 1 und 3 ein Verfahren zur paketvermittelten Datenübertragung zwischen Basisstationen und einer Teilnehmerstation in einem zellularen Funk-Kommunikationssystem bei Funkzellenwechsel bekannt. Gemäß dem Verfahren werden nummerierte Datenpaketen in dem zellularen Funkkommunikationssystem übertragen, die empfangenen Datenpakete in der Teilnehmerstation zwischengespeichert, wobei ein Fehlerbehandlungsverfahren angewendet wird, in der Basisstation aus dem Inhalt des Zwischenspeichers betreffende Statusinformationen gespeichert, Übertragungen von Datenpakete von der ersten Funkzelle an eine zweite Funkzelle im Falle eines Funkzellenwechsels übergeben und die Statusinformation in der zweiten Funkzelle im Falle eines Funkzellenwechsels initialisiert.

Aufgabe der vorliegenden Erfindung ist es, ein Verfahren, eine Teilnehmerstation und ein Funk-Kommunikationssystem der eingangs genannten Art aufzuzeigen, welche ein effizientes Übertragen der Datenpakete in dem Funk-Kommunikationssystem bei einem Funkzellwechsel ermöglicht. Insbesondere wird angestrebt, die physikalischen Funkressourcen möglichst effizient zu nutzen bei möglichst geringem Verwaltungsaufwand in dem Radionetzwerk-Subsystem.

Diese Aufgabe wird hinsichtlich des Verfahrens durch ein Verfahren mit den Merkmalen nach Anspruch 1 gelöst.

Ausgestaltungen und Weiterbildungen der Erfindung sind Gegenstand des Unteranspruches.

Erfindungsgemäß wird die Übermittelung der Datenpakete von der ersten Funkzelle an eine zweite Funkzelle übergeben und durch eine der zweiten Funkzelle zugeordneten Basisstation werden die Datenpakete zu der mindestens einen Teilnehmerstation über mindestens einen weiteren Funkkanal übermittelt, wobei Statusinformationen von der genannten Basisstation gespeichert werden, die den Inhalt des genannten Zwischenspeichers betreffen, die Statusinformation in der zweiten Funkzelle zugeordneten Basisstation neu initialisiert wird und die Datenpakete des Zwischenspeichers der mindestens einen Teilnehmerstation an eine dem Zwischenspeicher nachgeordnete Sicherungsschicht, insbesondere die RLC Schicht (Radio Link Control), zur weiteren Verarbeitung weitergegeben werden. Durch dieses Verfahren wird die Funkschnittstelle nicht durch erneute Übermittelung aller im Zwischenspeicher befindlichen Datenpakete belastet. In der der Zwischenschicht nachgeordneten Sicherungsschicht werden Fehlerkorrekturverfahren durchgeführt, die fehlerhaft übertragene Datenpakete erkennen. Auf Anfrage dieser Schicht können nur die fehlerhaften Datenpakete erneut übertragen werden. Durch Ausnutzen der Fehlerkorrekturverfahren der nachgeschalteten Sicherungsschicht ist es möglich, die Zahl der erneut zu übermittelnden Datenpakete zu reduzieren und somit die Funkressourcen effizient zu nutzen.

In Weiterbildung der Erfindung kann der mindestens eine und/oder der weitere Funkkanal ein nach dem UMTS Standard spezifizierter HSDPA (High Speed Downlink Packet Access) Funkkanal sein. Insbesondere kann der Funkkanal nach dem Dokument
R2-012001, "UTRA High Speed Downlink Packet Access (Release 5)", Technical Specification Group Radio Access Network, 3^{rd} Generation Partnership Project (3GPP), als derzeit geplanter HSDPA-Funkkanal (High Speed Downlink Packet Access) in einem nach UMTS-Standard arbeitenden Funk-Kommunikationssystem eingesetzt werden.

Im Hinblick auf das Funk-Kommunikationssystem wird die oben genannte Aufgabe durch ein zellulares Funk-Kommunikationssystem mit den Merkmalen nach Anspruch 3 gelöst.

Erfindungsgemäß umfasst das zellulare Funk-Kommunikationssystem
a) eine erste Basisstation, die einer ersten Funkzelle zugeordnet ist, zum Übertragen von nummerierten Datenpaketen an mindestens eine Teilnehmerstation,
b) eine Teilnehmerstation zum Empfangen von Datenpaketen von der ersten Basisstation und zum Speichern der empfangenen Datenpakete in einem Zwischenspeicher,
c) eine in der Teilnehmerstation vorhandenen Protokolleinrichtung zum Anwenden eines Fehlerbehandlungsverfahren auf die gespeicherten Datenpakete, wobei das Fehlerbehandlungsverfahren eine Wiederholungsanforderung eines fehlerhaft übertragenen Datenpakets umfasst,
d) einen in der ersten Basisstation vorhandenen Statusspeicher zum Speichern von Statusinformationen, die den Inhalt des genannten Zwischenspeichers betreffen,
e) Mittel zur Übergabe der Übertragung der Datenpakete zu der TS von der ersten Funkzelle an eine zweite Funkzelle im Falle eines Zellwechsels,
f) eine zweite Basisstation, die einer zweiten Funkzelle zugeordnet ist, die ebenfalls einen Statusspeicher zum Speichern von Statusinformationen bezüglich des Inhalts des genannten Zwischenspeichers aufweist, die die Übertragung von Datenpaketen nach der genannten Übergabe fortsetzt und die im Falle eines Funkzellenwechsels und einer damit verbundenen Übergabe der Datenübertragung die Statusinformationen in dem Statusspeicher neu initialisiert,
g) Mittel in der Teilnehmerstation, die die Datenpakete des Zwischenspeichers an eine dem Zwischenspeicher nachgeordnete Sicherungsschicht zur weiteren Verarbeitung weitergeben, und zwar ohne weitere Anwendung des genannten Fehlerbehandlungsverfahrens.

Für die Erfindung sind in einem Funk-Kommunikationssystem insbesondere die Komponenten Basisstation und Teilnehmerstation von Bedeutung.

Im Hinblick auf die Teilnehmerstation wird die oben genannte Aufgabe durch eine Teilnehmerstation mit den Merkmalen nach Anspruch 4 gelöst.

Die Teilnehmerstation ist erfindungsgemäß derart ausgestaltet, dass sie umfasst
a) einen Zwischenspeicher zum Zwischenspeichern von empfangenen Datenpaketen,
b) eine Protokolleinrichtung zum Anwenden eines Fehlerbehandlungsverfahren auf die gespeicherten Datenpakete, wobei
b1) das Fehlerbehandlungsverfahren eine Wiederholungsanforderung eines fehlerhaft übertragenen Datenpakets umfasst, und b2) die Protokolleinrichtung im Falle eines Funkzellenwechsels und einer damit verbundenen Übergabe der Datenübertragung die Datenpakete an eine dem Zwischenspeicher nachgeordnete Schicht zur weiteren Verarbeitung übergibt, und zwar ohne weitere Anwendung des genannten Fehlerbehandlungsverfahrens.

Einzelheiten und Details der Erfindung werden nachfolgend anhand von Zeichnungen und darin dargestellter Ausführungsbeispiele näher erläutert.

Hierbei zeigen:
- Fig. 1:: die schematische Darstellung eines Funk-Kommunikationssystems zur Paketdatenübertragung bei Funkzellenwechsel,

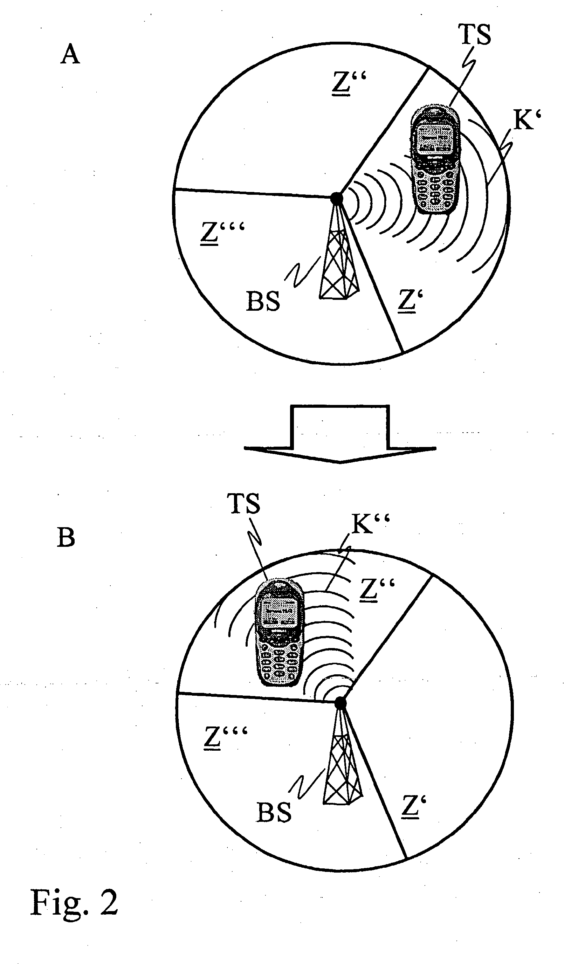

- Fig. 2:: die schematische Darstellung eines Funk-Kommunikationssystems zur Paketdatenübertragung bei Funkzellensektorwechsel.

In Fig. 1 ist der funktionale Aufbau eines Funk-Teilsystems eines Funk-Kommunikationssystems dargestellt. Zu diesem Funk-Teilsystem gehören ein Radionetzwerkkontroller RNC und zwei Basisstationen BS1 und BS2. Die Basisstationen BS1 und BS2 sind logische Einheiten, die für die Funkübertragung K1 und K2 in den Funkzellen Z1 und Z2 verantwortlich sind und über eine Schnittstelle mit dem Radionetzwerkkontroller RNC kommunizieren. Bezogen auf das ISO/OSI Referenzmodell unterstützen die Basisstationen BS1 und BS2 zu einer Teilnehmerstation TS hin nur die physikalische Schicht des Protokollstapels, während der Radionetzwerkcontroller RNC außerdem die Bitübertragungs-, die Sicherungs- und die Vermittlungsschicht des Protokollstapels umfasst. Die Sicherungsschicht zerfällt hierbei in die Unterschichten MAC-Schicht (Medium Access Control), RLC-Schicht (Radio Link Control), PDCP-Schicht (Paket Data Convergence Protocol) und BMC-Schicht (Broadcast/Multicast Control).

Zur Fehlerbehandlung bei der Paketdatenübertragung gibt es im Wesentlichen zwei Ansätze - Vorwärtsfehlerkorrekturverfahren und ARQ-Verfahren (Automatic Repeat Request). Im Unterschied zur Vorwärtsfehlerkorrekturen werden bei den ARQ-Verfahren gestörte Datenpakete nicht vom Empfänger korrigiert und dann akzeptiert, sondern gestützt auf einen Fehler erkennenden Code, mit eventuell zusätzlichen Korrekturen, auf Korrektheit überprüft. Wird bei dem ARQ-Verfahren ein Datenpaket als nicht korrekt erkannt, so wird es im Empfänger erneut von dem Sender angefordert.

Dieses ARQ-Verfahren setzt einen Rückkanal zwischen Sender und Empfänger voraus, über den die Ergebnisse der Fehlerauswertung durch eine Quittung (acknowledgement) dem Sender mitgeteilt werden. Dazu werden alle übertragenden Datenpakete mit einer Laufnummer versehen, die die erste Reihenfolge im Sender definiert. Für ein korrekt empfangenes Datenpaket wird eine positive Quittung gesendet. Ist das empfangende Datenpaket fehlerhaft, so wird eine negative Quittung gesendet und seine erneute Übertragung verlangt. Das Datenpaket hat in der Regel eine für das ARQ-Verfahren spezifische Struktur.

Für eine effektive Nutzung der Funkressourcen mit einer effektiven Realisierung des ARQ-Verfahrens werden entsprechend der Erfindung in der Teilnehmerstation TS die empfangenden Datenpakete in einem Zwischenspeicher gespeichert.

Das Speichern kann beispiels- aber nicht notwendigerweise derart erfolgen, dass die Datenpakete in die erste Reihenfolge, d.h. entsprechend der Laufnummer der übertragenden Datenpakete, sortiert werden. Durch die Sortierung der Datenpakete in der physikalischen Schicht kann zum einen die weitere Verarbeitung der Datenpakete in höheren Schichten und zum anderen das ARQ-Verfahren erleichtert werden.
Darüber hinaus ist es möglich, dass die der Funkzelle Z1 zugeordnete Basisstation BS1 mindestens eine den Inhalt des Zwischenspeichers der Teilnehmerstation TS betreffend Statusinformation in einem Statusspeicher vorhält/abbildet. In diesem Fall sollte die Basisstation BS1 diese Statusinformationen der übertragenden Datenpakte solange in dem Statusspeicher halten, bis sie als fehlerfrei empfangen von der Teilnehmerstation TS gemeldet worden sind.

Durch diese Verwaltung der Datenpakete in der Basisstation BS1 und der Teilnehmerstation TS ist es möglich, das ARQ-Verfahren in einem ersten Schritt auf der physikalischen Schicht des Protokollstapels der Basisstation BS1 und der Teilnehmerschicht TS durchzuführen.

Im Falle eines Zellwechsels besteht das Problem, dass die Statusinformation in der Zielzelle Z2 mit der Basisstation BS2 nicht bekannt ist.

Erfindungsgemäß wird die Übermittlung der Datenpakete zu der Teilnehmerstation von der ersten Funkzelle Z1 mit der zugeordneten Basisstation BS1 an die zweite Funkzelle Z2 mit der Basisstation BS2 übergeben.

Für die Bearbeitung der Statusinformation bezüglich der empfangenden Datenpakete bei einem Funkzellenwechsel gibt es folgende Optionen.

Neben dem Übergeben der Statusinformation von der der ersten Funkzelle Z1 zugeordneten Basisstation BS1 an die der zweiten Funkzelle Z2 zugeordneten Basisstation Z2 wird erfindungsgemäß vorgeschlagen, dass die Statusinformationen in der der zweiten Funkzelle Z2 zugeordneten Basisstation BS2 neu initialisiert werden und die Datenpakete in den Zwischenspeicher der Teilnehmerstation TS an höhere Protokollschichten, insbesondere die RLC-Unterschicht der Sicherungsschicht zur weiteren Verarbeitung weitergeben werden. In diesem Fall wird auf ein ARQ-Verfahren in der physikalischen Schicht der Basisstationen BS1 und BS2 verzichtet.

Für das Übergeben der Statusinformation von der ersten Funkzelle Z1 zur zweiten Funkzelle Z2 bieten sich folgende Möglichkeiten an.

Erstens kann die Statusinformation mittels eines Basisstationsnetzwerkes - entsprechend dem Radionetzwerkcontrollers RNC in Fig. 1 - zwischen der der ersten Funkzelle Z1 zugeordneten Basisstation BS1 und der der zweiten Funkzelle Z2 zugeordneten Basisstation BS2 übergeben werden.

Zweitens kann die Statusinformation mittels der Teilnehmerstation TS an die der zweiten Funkzelle Z2 zugeordneten Basisstation BS2 übergeben werden. Diese Information wird im Wesentlichen über den Funkkanal K2 zwischen der Teilnehmerstation TS und der Basisstation BS2 übermittelt.

Eine dritte Möglichkeit ist, dass der Statusspeicher in der der zweiten Funkzelle Z2 zugeordneten Basisstation BS2 und der Zwischenspeicher der Teilnehmerstation TS gelöscht und/oder neu initialisiert wird. Für das ARQ-Verfahren auf der Basis der physikalischen Protokollstapelschicht bedeutet dies, dass die in dem Zwischenspeicher gespeicherten Datenpakte erneut von der zweiten Funkzelle Z2 zugeordneten Basisstation BS2 übermittelt werden müssen.

Eine weitere im Hinblick auf das Übergeben der Statusinformation von der Basisstation BS1 zur Basisstation BS2 besonders effiziente Möglichkeit ist in Fig. 2 dargestellt. Die Übergabe der Statusinformationen von der der ersten Funkzelle Z' zugeordneten Basisstation BS an die der zweiten Funkzelle Z'' zugeordneten Basisstation BS muss nicht über externe Vermittlungseinrichtungen erfolgen, wenn die der ersten Funkzelle Z' zugeordneten Basisstation BS und die der zweiten Funkzelle Z'' zugeordnete Basisstation BS2 identisch sind. In diesem Fall können die Statusinformationen basisstationsintern übergeben werden. Die Fig. 2 zeigt die in drei Zellsektoren Z', Z'' und Z''' aufgeteilte Funkzelle. Die Basisstation BS ist physikalisch allen drei Zellsektoren Z', Z'' und Z''' zugeteilt, wobei die interne Verwaltung der drei Zellsektoren voneinander unabhängig in der Basisstation BS durchgeführt wird. Im Rahmen dieser Zellsektor unabhängigen Verwaltung werden die Statusinformationen von der Verwaltungseinheit des Zellsektors Z' and Z'' übergeben.

Durch die vorgestellten optionalen Verfahren wird der Verantwortungsbereich der Basisstationen signifikant erweitert.
Nach den bislang bekannten Verfahren war die Basisstation auf Verfahren der physikalischen Schicht des Protokollstapels des ISO/OSI Referenzmodells beschränkt; die Verwaltung der Datenpakete nach erfolgtem Senden war nicht im Aufgabenbereich der Basisstationen. Im Fall eines Zellwechsels wurden die Statusinformationen verworfen und Datenpakete, die im Zwischenspeicher waren, mussten von der Basisstation der Zielfunkzelle erneut übermittelt werden. Durch die vorgestellten Verfahren ist es nun möglich, dass auch bei einem Zellwechsel die im Zwischenspeicher befindlichen Datenpakete nicht erneut übermittelt werden müssen. Da die Statusinformation von der ersten Funkzelle an die zweite Funkzelle - die Zielfunkzelle - weitergegeben wird, sind in der Zielfunkzelle alle Statusinformationen vorhanden, so dass ohne Verzögerung bzw. Wiederholung von bereits an die Teilnehmerstation übermittelte Datenpakete mit der regulären Übermittlung von Datenpaketen fortgefahren werden kann. Dies führt dazu, dass die Datenpakete auch bei Zellwechsel effizient übertragen werden und die physikalischen Ressourcen der Funkschnittstelle nicht durch die erneute Übermittlung der Datenpakete belastet werden. Die Sortierung der Reihenfolge der Datenpakete bezieht im Rahmen dieses Verfahren sowohl auf die Zahl der gesendeten Datenpakete als auch auf die Ordnung der Datenpakete innerhalb einer Reihe. Bezüglich der ersten und zweiten Reihenfolge, die der gesendeten und empfangenen Reihenfolge der Datenpakete entsprechen, besteht die Möglichkeit, dass beide Reihenfolgen unterschiedlich ausgestaltet sind. Dies ist der in der Praxis der am häufigsten auftretende Fall. Aber es besteht auch die Möglichkeit, dass beide Reihenfolgen identisch sind.

In diesem Fall, wenn die der ersten Funkzelle zugeordnete Basisstation und die der zweiten Funkzelle zugeordnete Basisstation identisch sind, wird die Statusinformation wird basisstations-intern übergeben. Dies ist besonders effizient, da die Übergabe der Statusinformation auf "kürzestem Weg" stattfindet. Die Basisstation ist logisch unterschiedlichen Funkzellen oder Zellsektoren zugewiesen und verwaltet diese Funkzellen voneinander unabhängig. Wechselt die Teilnehmerstation von einem Zellensektor in den benachbarten Zellensektor derselben Basisstation, so müssen die Statusinformation zwischen logisch unabhängigen Verwaltungseinheiten der Zellsektoren ausgetauscht werden. Der für das gesamte Funk-Kommunikationssystem anfallende Verwaltungsaufwand bezüglich der Statusinformationen ist damit minimal.

Darüber hinaus ist es möglich die Statusinformation mittels eines Basisstationsnetzwerks zwischen der der ersten Funkzelle zugeordneten Basisstation und der der zweiten Funkzelle zugeordneten Basisstation zu übergeben. Ziel dabei ist es immer, die physikalische Schnittstelle, d.h. die Funkschnittstelle, möglichst wenig zu belasten. Wird die Statusinformation bei einem Funkzellenwechsel verworfen, so müssen die Datenpakete konventionell erneut übermittelt werden. Dies führt zu einer zusätzlichen Belastung der Funkschnittstelle. Werden die Statusinformationen aber beispielsweise über das Basisstationsnetzwerks übergeben, so führt dies zu einer Entlastung der Funkschnittstelle und damit zu einer besseren und damit effektiveren Nutzung der Funk-Ressourcen.

Weiterhin ist es möglich, die Statusinformation mittels der mindestens einen Teilnehmerstation an die der zweiten Funkzelle zugeordneten Basisstation zu übergeben. Der Inhalt der Statusinformation ist in der Regel kleiner als der Inhalt der Datenpakete im Zwischenspeicher, so dass die Übermittelung der Statusinformationen über den Funkkanal die Funk-Ressourcen weniger belastet als die erneute Übermittelung der Datenpakete. Auch diesbezüglich ist die Funk-Ressource besser genutzt als bei erneuter Übermittelung der Datenpakete, wie es nach dem Stand der Technik vorgesehen ist.

Als zusätzliche Möglichkeit kann der Statusspeicher in der der zweiten Funkzelle zugeordneten Basisstation und der Zwischenspeicher in der mindestens einen Teilnehmerstation gelöscht und/oder neu initialisiert werden. Die in dem Zwischenspeicher der mindestens einen Teilnehmerstation gespeicherten Datenpakete werden erneut von der der zweiten Funkzelle zugeordneten Basisstation übermittelt. Die im Zwischenspeicher befindlichen Datenpakete gehen auf diese Weise nicht verloren.

Die der ersten Funkzelle zugeordnete Basisstation und/oder die der zweiten Funkzelle zugeordnete Basisstation werten die Statusinformation des Zwischenspeichers aus und für den Fall, dass Datenpakete fehlerhaft übertragen wurden, werden die fehlerhaften Datenpakete erneut übermittelt. Dies ermöglicht es, bereits auf der physikalischen Schicht des Protokollstapels in der Basisstation Fehlerkorrekturverfahren anzuwenden. Somit wird der Verwaltungsaufwand in dem gesamten Funk-Kommunikationssystem minimiert. Besonders eignen sich für die Fehlerkorrektur ARQ-Verfahren (automatic repeat request).

Bei der Anwendung des Fehlerkorrekturverfahrens ist es sinnvoll, die Datenpakete des Zwischenspeichers der mindestens einen Teilnehmerstation an eine dem Zwischenspeicher nachgeordnete Sicherungsschicht, insbesondere die Radio Link Control Schicht, zur weiteren Verarbeitung weiterzugeben. In dieser Sicherungsschicht werden die Datenpakete erneut verarbeitet, wobei insbesondere Fehlerkorrekturverfahren und dabei vorzugsweise ARQ-Verfahren angewandt werden. Damit wird sowohl in der physikalisch Schicht basierend auf den Zwischenspeichern als auch in der Sicherungsschicht ein zweistufiges Fehlerkorrekturverfahren ermöglicht:
Stufe eins in der Verantwortung der Basisstation und Stufe zwei in der Verantwortung eines Netzwerkcontrollers.

Im Unterschied zu dem erfindungsgemäßen Verfahren, wo auf das ARQ-Verfahren in der physikalischen Schicht der Basisstationen BS1 und BS2 verzichtet wird, erlauben die optionalen Verfahren in einem ersten Schritt ein ARQ-Verfahren auf der physikalischen Schicht des Protokollstapels. Die der ersten Funkzelle Z1 zugeordnete Basisstation BS1 und/oder die der zweiten Funkzelle Z2 zugeordnete Basisstation BS2 werten die Statusinformationen bereits auf der physikalischen Schicht aus. Für den Fall, dass Datenpakete fehlerhaft übertragen wurden, sollen die fehlerhaften Pakete erneut übermittelt werden.

Bei den optionalen Verfahren ist es möglich, dass die Datenpakete des Zwischenspeichers der mindestens einen Teilnehmerstation TS an die dem Zwischenspeicher nachgeordnete Sicherungsschicht RLC des Protokollstapels weitergegeben wird. In dieser Sicherungsschicht werden die Datenpakete weiter verarbeitet und insbesondere in der RLC-Schicht wird ein zweites Mal ein ARQ-Verfahren angewandt. Dies ist die zweite Stufe des ARQ-Verfahrens. Die zweite Stufe des ARQ-Verfahren findet von den Basisstationen BS1 und BS2 abgesetzt in dem Radionetzwerkcontroller RNC statt.

Mit besonderem Vorteil werden sowohl das erfindungsgemäße Verfahren als auch die anderen beschriebenen optionalen Verfahren auf Funkkanäle angewandt, die nach dem UMTS Standard spezifizierte HSDPA (High Speed Downlink Paket Access) Funkkanäle sind.

## Patentansprüche

1. Verfahren zur paketvermittelten Übertragung von Nutzinformation enthaltenden Datenpaketen in einem zellularen Funk-Kommunikationssystem, bei dem
- nummerierte Datenpakete durch eine einer ersten Funkzelle (Z1; Z') zugeordnete Basisstation (BS1; BS) an mindestens eine Teilnehmerstation (TS) übermittelt werden,
- die von der mindestens einen Teilnehmerstation (TS) empfangenen Datenpakete in einem Zwischenspeicher gespeichert werden, wobei auf die gespeicherten Datenpakete ein Fehlerbehandlungsverfahren angewendet wird, das eine Wiederholungsanforderung eines fehlerhaft übertragenen Datenpakets umfasst,
- von der genannten Basisstation Statusinformationen gespeichert werden, die den Inhalt des genannten Zwischenspeichers betreffen, wobei
im Falle eines Funkzellenwechsels
- die Übertragung der Datenpakete zu der Teilnehmerstation von der ersten Funkzelle an eine zweite Funkzelle übergeben wird und
die Statusinformation in der der zweiten Funkzelle (Z2; Z'') zugeordneten Basisstation neu initialisiert wird,
**dadurch gekennzeichnet, dass**
die Datenpakete des Zwischenspeichers der mindestens einen Teilnehmerstation (TS) ohne weitere Anwendung des genannten Fehlerbehandlungsverfahrens an eine dem Zwischenspeicher nachgeordnete Sicherungsschicht (RLC) zur weiteren Verarbeitung weitergegeben werden.

2. Verfahren nach Anspruch 1,
**dadurch gekennzeichnet,**
**dass** der mindestens eine erste und/oder der mindestens eine zweite Funkkanal (K1, K2; K', K'') ein nach dem UMTS Standard spezifizierter HSDPA (High Speed Downlink Packet Access) Funkkanal ist.

3. Zellulares Funk-Kommunikationssystem zur paketvermittelten Übertragung von Datenpaketen, mit
- einer ersten Basisstation (BS1; BS), die einer ersten Funkzelle (Z1; Z') zugeordnet ist, zum Übertragen von nummerierten Datenpaketen an mindestens eine Teilnehmerstation (TS),
- einer Teilnehmerstation (TS) zum Empfangen von Datenpaketen von der ersten Basisstation (BS1; BS) und zum Speichern der empfangenen Datenpakete in einem Zwischenspeicher,
- einer in der Teilnehmerstation (TS) vorhandenen Protokolleinrichtung zum Anwenden eines Fehlerbehandlungsverfahren auf die gespeicherten Datenpakete, wobei das Fehlerbehandlungsverfahren eine Wiederholungsanforderung eines fehlerhaft übertragenen Datenpakets umfasst,
- einem in der ersten Basisstation vorhandenen Statusspeicher zum Speichern von Statusinformationen, die den Inhalt des genannten Zwischenspeichers betreffen,
- Mittel zur Übergabe der Übertragung der Datenpakete zu der TS von der ersten Funkzelle an eine zweite Funkzelle im Falle eines Zellwechsels,
- einer zweiten Basisstation, die einer zweiten Funkzelle zugeordnet ist, die ebenfalls einen Statusspeicher zum Speichern von Statusinformationen bezüglich des Inhalts des genannten Zwischenspeichers aufweist, die die Übertragung von Datenpaketen nach der genannten Übergabe fortsetzt und dieim Falle eines Funkzellenwechsels und einer damit verbundenen Übergabe der Datenübertragung die Statusinformationen in dem Statusspeicher neu initialisiert,
**dadurch gekennzeichnet, dass**
die Teilnehmerstation (TS) die Datenpakete des Zwischenspeichers an eine dem Zwischenspeicher nachgeordnete Sicherungsschicht (RLC) zur weiteren Verarbeitung weitergibt, und zwar ohne weitere Anwendung des genannten Fehlerbehandlungsverfahrens.

4. Teilnehmerstation (TS), insbesondere zur Verwendung in einem Funk-Kommunikationssystem nach Anspruch 3, mit
- einem Zwischenspeicher zum Zwischenspeichern von empfangenen Datenpaketen,
- einer Protokolleinrichtung zum Anwenden eines Fehlerbehandlungsverfahren auf die gespeicherten Datenpakete, wobei das Fehlerbehandlungsverfahren eine Wiederholungsanforderung eines fehlerhaft übertragenen Datenpakets umfasst,
**dadurch gekennzeichnet, dass**
- die Protokolleinrichtung im Falle eines Funkzellenwechsels und einer damit verbundenen Übergabe der Datenübertragung die Datenpakete an eine dem Zwischenspeicher nachgeordnete Schicht zur weiteren Verarbeitung übergibt, und zwar ohne weitere Anwendung des genannten Fehlerbehandlungsverfahrens.

## Claims

1. Method for packet switched transmission of data packets containing useful information in a cellular radio communication system, in which
- numbered data packets are transmitted by a base station (BS1; BS) associated with a first radio cell (Z1; Z') to at least one subscriber station (TS),
- the data packets received by the at least one subscriber station (TS) are stored in an intermediate storage unit, wherein an error handling method is applied to the stored data packets, which includes a repetition request from an erroneously transmitted data packet,
- status information is stored by the cited base station, said status information relating to the content of the cited intermediate storage unit, wherein
in the event of a radio cell changeover
- the transmission of data packets to the subscriber station is relayed from the first radio cell to the second radio cell and the status information in the base station associated with the second radio cell (Z2; Z'') is reinitialized,
**characterised in that**
the data packets in the intermediate storage unit of the at least one subscriber station (TS) are forwarded to a radio link control (RLC) downstream of the intermediate storage unit for further processing, without additionally applying the cited error handling method.

2. Method according to claim 1,
**characterised in that**
the at least one first and/or the at least one second radio channel (K1, K2; K', K'') are an HSDPA (high speed downlink packet access) radio channel specified according to the UMTS standard.

3. Cellular radio communication system for packet switched transmission of data packets, including
- a first base station (BS1; BS) associated with a first radio cell (Z1; Z') for transmitting numbered data packets to at least one subscriber station (TS),
- a subscriber station (TS) for receiving data packets from the first base station (BS1; BS) and for storing the received data packets in an intermediate storage unit,
- a logging device present in the subscriber station (TS) for applying an error handling method to the stored data packets, wherein the error handling method includes a repetition request from an erroneously transmitted data packet,
- a status memory unit present in the first base station for storing status information which relates to the content of the cited intermediate storage unit,
- means for relaying the transmission of data packets to the TS from the first radio cell to a second radio cell in the event of a cell changeover,
- a second base station associated with a second radio cell, which likewise has a status memory unit for storing status information in respect of the content of the cited intermediate storage unit, which continues the transmission of data packets after the cited relaying and which, in the event of a radio cell changeover and a relaying of the data transmission connected thereto reinitializes the status information in the status storage unit,
**characterised in that**
the subscriber station (TS) forwards the data packets of the intermediate storage unit to a link layer control (RLC) arranged downstream of the intermediate storage unit for further processing, namely without further applying the cited error handling method.

4. Subscriber station (TS), in particular for use in a radio communication system according to claim 3, with
- a means of intermediate storage for received data packets,
- a logging device for applying an error handling method to the stored data packets, wherein the error handling method includes a repetition request from an erroneously transmitted data packet,
**characterised in that**
- the logging device, in the event of a radio cell changeover and a relaying of the data transmission connected thereto, relays the data packets to a layer downstream of the intermediate storage unit for further processing, namely without further applying the cited error handling method.

## Revendications

1. Procédé de transmission, à commutation par paquets, de paquets de données contenant une information utile dans un système de radiocommunication cellulaire, dans lequel
- des paquets de données numérotés sont transmis par une station de base (BS1 ; BS) associée à une première cellule radio (Z1 ; Z') à au moins une station d'abonné (TS),
- les paquets de données reçus par la au moins une station d'abonné (TS) sont stockés dans une mémoire tampon, les paquets de données stockés se voyant appliquer un procédé de traitement d'erreur qui comprend une demande de retransmission d'un paquet de données transmis de manière erronée,
- des informations d'état relatives au contenu de la mémoire tampon sont stockées par la station de base, sachant que
en cas de changement de cellule radio
- la transmission des paquets de données à la station d'abonné est transférée de la première cellule radio à une seconde cellule radio et
l'information d'état est réinitialisée dans la station de base associée à la seconde cellule radio (Z2 ; Z''),
**caractérisé en ce que**
les paquets de données de la mémoire tampon de la au moins une station d'abonné (TS) sont transférés, sans autre application du procédé de traitement d'erreur, à une couche liaison (RLC) en aval de la mémoire tampon pour traitement ultérieur.

2. Procédé selon la revendication 1,
**caractérisé en ce que**
le au moins un premier et/ou le au moins un second canal radio (K1, K2 ; K', K'') est un canal radio HSDPA (High Speed Downlink Packet Access) spécifié selon le standard UMTS.

3. Système de radiocommunication cellulaire pour la transmission, à commutation par paquets, de paquets de données, comprenant
- une première station de base (BS1 ; BS) associée à une première cellule radio (Z1 ; Z'), pour transmettre des paquets de données numérotés à au moins une station d'abonné (TS),
- une station d'abonné (TS) pour recevoir des paquets de données de la première station de base (BS1 ; BS) et pour stocker les paquets de données reçus dans une mémoire tampon,
- un dispositif de protocole présent dans la station d'abonné (TS), pour appliquer aux paquets de données stockés un procédé de traitement d'erreur, le procédé de traitement d'erreur comprenant une demande de retransmission d'un paquet de données transmis de manière erronée,
- une mémoire d'état présente dans la station de base, pour stocker des informations d'état relatives au contenu de la mémoire tampon,
- des moyens pour transférer la transmission des paquets de données à la TS de la première cellule radio à une seconde cellule radio en cas de changement de cellule,
- une seconde station de base, qui est associée à une seconde cellule radio, qui comprend également une mémoire d'état pour stocker des informations d'état relative au contenu de la mémoire tampon, qui poursuit la transmission de paquets de données après le transfert et qui en cas de changement de cellule radio, et donc de transfert de la transmission de données, réinitialise les informations d'état dans la mémoire d'état,
**caractérisé en ce que**
la station d'abonné (TS) transfère les paquets de données de la mémoire tampon à une couche liaison (RLC) en aval de la mémoire tampon pour traitement ultérieur, et ceci sans autre application du procédé de traitement d'erreur.

4. Station d'abonné (TS), notamment pour l'utilisation dans un système de radiocommunication selon la revendication 3, comprenant
- une mémoire tampon pour stocker temporairement des paquets de données reçus,
- un dispositif de protocole pour appliquer aux paquets de données stockés un procédé de traitement d'erreur, le procédé de traitement d'erreur comprenant une demande de retransmission d'un paquet de données transmis de manière erronée,
**caractérisée en ce que**
- en cas de changement de cellule radio, et donc de transfert de la transmission de données, le dispositif de protocole transfère les paquets de données à une couche en aval de la mémoire tampon pour traitement ultérieur, et ceci sans autre application du procédé de traitement d'erreur.
